# EUROPÄISCHE PATENTSCHRIFT

(11) **EP 1 710 151 B1**
(45) Veröffentlichungstag und Bekanntmachung des Hinweises auf die Patenterteilung: **31.12.2008**
(21) Anmeldenummer: 06006955.6
(22) Anmeldetag: 31.03.2006
(51) Int. Cl.: B62D 21/12

(54) **Höhenverstellbarer Querträger**
Vertically adjustable transversal beam
Poutre transversale à position verticale variable

(30) Priorität: 04.04.2005 DE 102005015389
(43) Veröffentlichungstag der Anmeldung: 11.10.2006
(73) Patentinhaber: MAN Nutzfahrzeuge Aktiengesellschaft, 80976 München (DE)
(72) Erfinder: Just, Robert, 85256 Vierkirchen (DE); Weissbrodt, Olaf, 80995 München (DE); Kruppa, Andreas, 85579 Neubiberg (DE)

(56) Entgegenhaltungen:
- EP-A- 1 359 031
- WO-A-01/76896
- DE-A- 19 625 380
- GB-A- 2 223 192
- US-A- 5 562 179

## Beschreibung

### Technisches Gebiet:

Die Erfindung betrifft einen Querträger für ein Nutzfahrzeug, insbesondere Lastkraftwagen. Nutzfahrzeuge verfügen üblicherweise über einen Rahmenaufbau mit zwei Längsträgern, die über so genannte Querträger mit einander verbunden sind.

### Stand der Technik:

Die konstruktive Ausgestaltung des Rahmenaufbaus, also auch die Anordnung und Gestaltung der Querträger richtet sich nach der Beanspruchung des Nutzfahrzeugs sowie nach der Anzahl und Art der im Bereich der Rahmenlängsträger vorgesehenen Aggregate. Als wichtigste Komponenten, die den Aufbau des Rahmens bestimmen, sind in diesem Zusammenhang Motor, Getriebe, Gelenkwelle sowie Achsen zu nennen. Hierbei stellt die Gelenkwelle jeweils die Verbindung zwischen einem Haupt- oder Verteilergetriebe (bei Fahrzeugen mit mehreren angetriebenen Achsen) und den Achsen dar.

Aufgrund der großen Variantenvielfalt auf dem Nutzfahrzeugsektor ist es erforderlich, eine Vielzahl unterschiedlicher Querträger vorzusehen, die in den verschiedenen Fahrzeugtypen zum Einsatz kommen. Die konstruktive Gestaltung sowie die Anbringung der Querträger hängt hierbei sowohl von dem Typ des Fahrzeugs (Geländefahrzeug, Straßenfahrzeug), von der Ausstattung des Fahrzeugs (Motor sowie Art des Getriebes) als auch von der Anzahl der angetriebenen Achsen, bzw. ob ein Verteilergetriebe vorhanden ist oder nicht, ab. Bei den zurzeit bekannten Fahrzeugen wird eine Vielzahl unterschiedlicher Querträger eingesetzt, die jeweils eine feste Höhenzuordnung zum Rahmen aufweisen. Dies bedeutet zum einen einen erheblichen Aufwand in der Montage eines Nutzfahrzeugs, vor allem bei der Bevorratung und Bereitstellung der Querträger. Zum anderen bereitet dies oftmals den Aufbauherstellern Probleme, die nachträglich einen Aufbau auf den Rahmen montieren und sich hierbei an die starren, nicht veränderbaren Abmessungen des Rahmens und insbesondere auch der Rahmenquerträger richten müssen.

Aus der WO 01/76896 A1. ist ein Nutzfahrzeug nach dem Oberbegriff des Anspruchs 1 mit einem Schlussquerträger bekannt, der mit Hilfe geeigneter Anschlusselemente in wenigstens zwei unterschiedlichen Höhenlagen relativ zur Rahmenoberkante an den Rahmenlängsträgern befestigbar ist. Die beschriebene technischen Lösung soll es ermöglichen, dass eine Anhängerkupplung in unterschiedlichen Höhenlagen am Schlussquerträger eines Nutzfahrzeugs befestigt werden kann.

Der Erfindung liegt die Aufgabe zugrunde, ein Nutzfahrzeug mit einem Rahmenquerträger anzugeben, der verhältnismäßig einfach zu montieren ist und insbesondere auch eine nachträgliche Montage ermöglicht. Gleichzeitig soll der anzugebende Rahmenquerträger für unterschiedliche Rahmenlängsträgerprofile zu verwenden sein, um auf diese Weise den Aufwand für Lagerhaltung, Stücklistenpflege und Schulung der Mitarbeiter in der Montage möglichst gering zu halten.

Die vorgenannte Aufgabe wird mit einem Nutzfahrzeug gemäß Anspruch 1 gelöst: Vorteilhafte Weiterbildungen der Erfindung sind Gegenstand der Unteransprüche und werden in der nachfolgenden Beschreibung unter Bezugnahme auf die Figuren näher erläutert.

### Gegenstand der Erfindung:

Erfindungsgemäß ist ein Nutzfahrzeug, das über ein zwischen Rahmenlängsträgern angeordnetes Getriebe, an dem ausgangsseitig eine Gelenkwelle befestigt ist, verfügt und das einen Querträger aufweist, der die zwei Rahmenlängsträger verbindet und über ein Mittelteil sowie jeweils an den gegenüberliegenden Enden des Mittelteils vorgesehene Anschlusskonsolen verfügt, wobei die Anschlusskonsolen eine Anschlussstruktur aufweisen, in die Befestigungsmittel zur mittelbaren Befestigung der Anschlusskonsolen an den Rahmenlängsträgern einbringbar sind und die Anschlussstrukturen der Anschlusskonsolen derart ausgeführt sind, dass das Mittelteil in wenigstens zwei unterschiedlichen Positionen relativ zur Rahmenoberkante an den Rahmenlängsträgern befestigbar ist und an den Rahmenlängsträgern wenigstens ein Zwischenelement befestigt ist, an dem die Anschlusskonsolen in wenigstens zwei unterschiedlichen Positionen relativ zur Rahmenoberkante befestigbar sind, derart weitergebildet worden, dass das Mittelteil mit den jeweils an den gegenüberliegenden Enden des Mittelteils vorgesehenen Anschlusskonsolen an den Zwischenelementen befestigt sind, so dass das Mittelteil oberhalb der Gelenkwelle angeordnet ist.

Das erfindungsgemäß ausgeführte Nutzfahrzeug verfügt über einen Querträger, der innerhalb der Rahmenlängsträger vorzugsweise höhenverstellbar in Bezug auf eine Rahmenoberkante der Rahmenlängsträgern angeordnet ist. Der Querträger verfügt hierzu über ein Mittelteil und jeweils an den gegenüberliegenden Enden des Mittelteils vorgesehene Anschlusskonsolen mit einer Anschlussstruktur, in die Befestigungsmittel, wie etwa Nieten oder Schrauben, derart einführbar sind, dass der Querträger, in verschiedenen Höhenstufen relativ zu den Rahmenlängsträgern, insbesondere der Rahmenoberkante befestigbar ist. Grundsätzlich bestehen in diesem Zusammenhang die Möglichkeiten, den Querträger unmittelbar über seine Anschlusskonsolen oder mittelbar durch zusätzliche Zwischenelemente, die zwischen den Anschlusskonsolen und den Rahmenlängsträgern angeordnet sind, an den Rahmenlängsträgern zu befestigen.

Das erfindungsgemäß ausgeführte Nutzfahrzeug mit einem höhenverstellbaren Querträger verfügt bevorzugt über wenigstens einen Nebenabtrieb. Hier kann der Querträger an den erforderlichen Abgangswinkel der Gelenkwelle in der Höhe angepasst werden. Der Aufbauhersteller hat somit die Möglichkeit, die Höhe des Querträgers über Rahmenoberkante an seinen Aufbau bzw. an seine Antriebsstelle anzupassen.

In einer speziellen Ausführungsform werden die Anschlusskonsolen mittels Verbindungselementen an dem Mittelteil befestigt. Bei den vorteilhafterweise verwendeten Verbindungselementen handelt es sich um Schrauben oder Nieten. Alternativ hierzu ist es allerdings auch denkbar, das Mittelteil mit den Anschlusskonsolen einstückig auszuführen.

Die erfindungsgemäß zwischen den Anschlusskonsolen und den Rahmentängsträgem vorgesehenen Zwischenelemente sind vorzugsweise mit Hilfe von Befestigungsmitteln, insbesondere Schrauben und/oder Nieten, befestigt. Geeigneterweise sind hierbei die Zwischenelemente in ihrer Lage relativ zu den Rahmenlängsträgern fixiert, während das Mittelteil mit den Anschlusskonsolen des Querträgers in wenigstens zwei Positionen an den Zwischenelementen und somit auch an den Rahmenlängsträgern befestigbar sind.

In einer weiteren Ausführungsform der Erfindung sind die Anschlusskonsolen mehrstückig ausgeführt. Vorzugsweise verfügt eine Anschlusskonsole über zwei schenkelartige Konsolenelemente, die jeweils an dem Mittelteil des Querträgers befestigt werden.

Im Folgenden wird die Erfindung ohne Beschränkung des allgemeinen Erfindungsgedankens anhand von Ausführungsbeispielen unter Bezugnahme auf die Figuren näher erläutert. Es zeigen:
- Fig. 1:: perspektivische Ansicht eines Querträgers;
- Fig. 2:: Frontansicht auf einen zwischen Rahmenlängsträgern angeordneten Querträger;
- Fig. 3:: Frontansicht auf einen zwischen Rahmenlängsträgern angeordneten Querträger;
- Fig.4:: Anordnungsmöglichkeiten eines höhenverstellbaren Querträgers in einem Nutzfahrzeugrahmen;
- Fig. 5:: Querträger im Einbauzustand mit Getriebe und Gelenkwelle;
- Fig. 6:: perspektivische Ansicht eines genieteten Querträgerverbunds;
- Fig. 7:: perspektivische Ansicht eines geschraubten Querträgerverbunds;
- Fig. 8:: perspektivische Ansicht eines geschraubten Querträgers;
- Fig. 9:: geschraubter Querträger mit Zwischenelementen;
- Fig. 10:: genieteter Querträger mit Zwischenelementen.

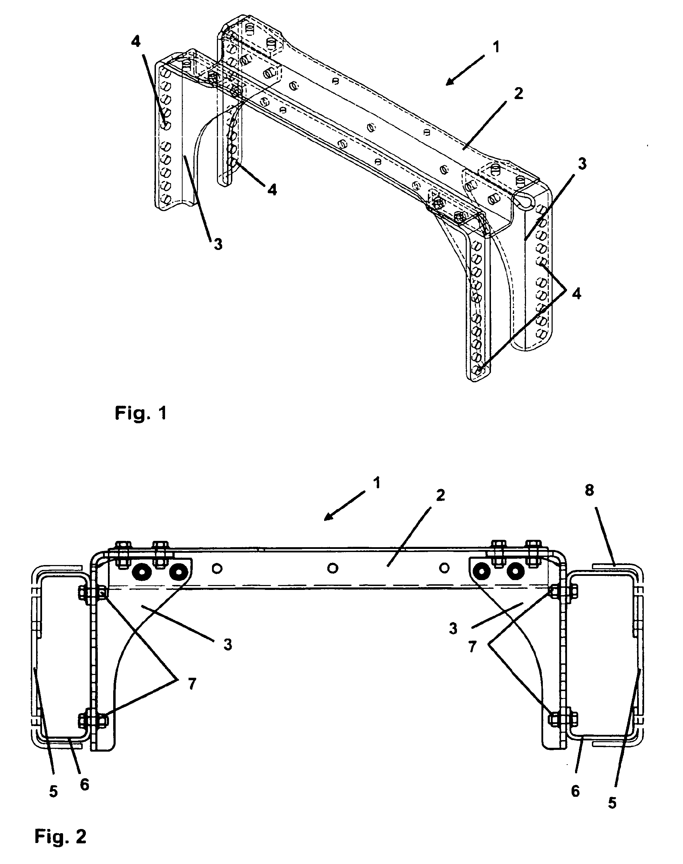

Die Figur 1 zeigt einen Querträger 1 mit einem Mittelteil 2 und jeweils gegenüberliegend an dem Mittelträger 2 vorgesehenen Anschlusskonsolen 3. Die Anschlusskonsolen 3 verfügen über als Löcher ausgeführte Anschlussstrukturen 4, über die der Querträger mit Hilfe von Befestigungsmitteln (Schrauben und/oder Nieten) an einem Fahrzeugrahmen oder an einem Rahmenanbauteil, wie etwa einem am Rahmen zu befestigenden Zwischenelement 6, montierbar ist.

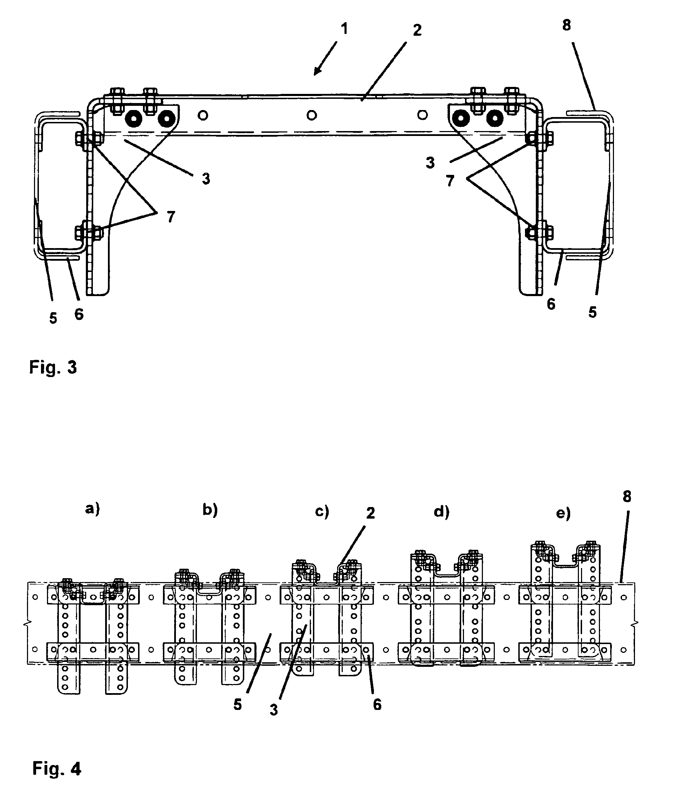

In Figur 2 ist eine Schnittansicht zweier Rahmenlängsträger 5 dargestellt, die über einen Querträger 1 miteinander verbunden sind. Innerhalb des U-Profils der Rahmenlängsträger 5 ist auf beiden Seiten ein Zwischenelement 6 vorgesehen, das mittels als Schrauben ausgeführten Befestigungsmitteln 7 an den Rahmenlängsträgern 5 befestigt ist. Der Querträger 1 verfügt über ein Mittelteil 2 und Anschlusskonsolen 3. Die Anschlusskonsolen 3 sind mittels Schraubverbindungen an den Zwischenelementen 6 befestigt. Ferner sind in den Anschlusskonsolen 3 weitere, nicht verschlossene Löcher 4 in Form von Lochreihen (in dieser Ansicht nicht sichtbar) vorgesehen, so dass die Anschlusskonsolen 3 und somit der gesamte Querträger 1 in unterschiedlichen Höhen relativ zur Rahmenoberkante 8 montierbar ist. Ergänzend zur Figur 2 zeigt die Figur 3 eine weitere Ausführungsform der in den Rahmenlängsträgern 5 angeordneten Zwischenelemente 6. Hierbei sind die Schenkellängen der Zwischenelemente 6 auf der Rahmenseite im Vergleich zu der in Figur 2 gezeigten Variante verändert worden.

Figur 4 zeigt eine Seitenansicht eines Rahmenlängsträgers 5, an dem in den Positionen a) bis e) verschiedene Möglichkeiten der Anbringung eines erfindungsgemäß ausgeführten, höhenverstellbaren Querträgers zu sehen sind. Die Querträger verfügen jeweils über ein Mittelteil 2 und Anschlusskonsolen 3, die über Zwischenelemente 6 an den Rahmenlängsträgern befestigt sind. In den Anschlusskonsolen 3 als Anschlussstrukturen 4 Löcher vorgesehen, die in Form von vertikal verlaufenden Lochreihen angeordnet sind. Je nachdem, in welcher Höhe der Querträger zwischen den Rahmenlängsträgern montiert werden soll, werden in die entsprechenden Löcher der Anschlusskonsole Schrauben eingeführt, um die Anschlusskonsole und somit den Querträger mit den am Rahmen befestigten Zwischenelementen 6 zu verschrauben. Die Position "a)" zeigt hierbei die in Bezug auf die Rahmenoberkante 8 niedrigste und die Position "e)" die höchste Möglichkeit der Befestigung des Querträgers zeigt. Die zwischen diesen Positionen dargestellten Positionen "b)" bis "d)" zeigen mögliche Zwischenstellungen des Querträgers.

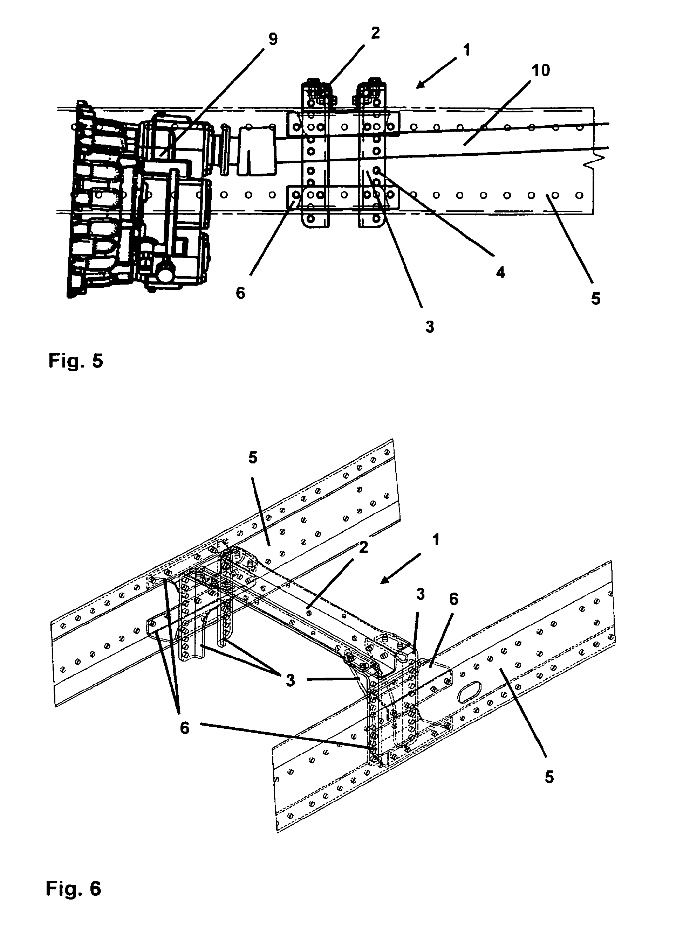

In Figur 5 ist der Einbauzustand eines in verschiedenen Höhenlagen einbaubaren Querträgers in einem Nutzfahrzeugrahmen dargestellt. Das Nutzfahrzeug verfügt über ein zwischen den Rahmenlängsträgern 5 angeordnetes Getriebe 9 an dem ausgangsseitig eine Gelenkwelle 10 befestigt ist.
Der höhenverstellbare Querträger 1 ist in diesem Fall in einer Höhe montiert, so dass eine Kollision zwischen Gelenkwelle 10 und Querträger 1 sicher ausgeschlossen ist. In der Seitenansicht der Figur 5 ist einer der Rahmenlängsträger 5 dargestellt, an dem ein zweistückig ausgeführtes Zwischenelement 6 befestigt ist. An dem Zwischenelement 6 ist wiederum die Anschlusskonsole 3 des Querträgers befestigt. Hierbei wurde für die Montage des Querträgers zwischen den Rahmenlängsträgern 5 dasjenige Loch der Anschlussstruktur 4 gewählt, das die Anordnung des Mittelteils 2 des Querträgers 1 oberhalb der Gelenkwelle 10 ermöglicht. Wie auch in dieser Darstellung erkennbar ist, verfügt die Anschlusskonsole 3 darüber hinaus über eine Anschlussstruktur 4 mit einer Vielzahl in unterschiedlichen Höhen angeordneter Löcher, die für den gezeigten Anwendungsfall ungenutzt bleiben. Grundsätzlich ermöglichen es diese in dem konkreten Anwendungsfall nicht genutzten Löcher, den Querträger in verschiedenen Höhen relativ zum Rahmenlängsträger 5, bzw. zur Oberkante der Rahmenlängsträger zu montieren.

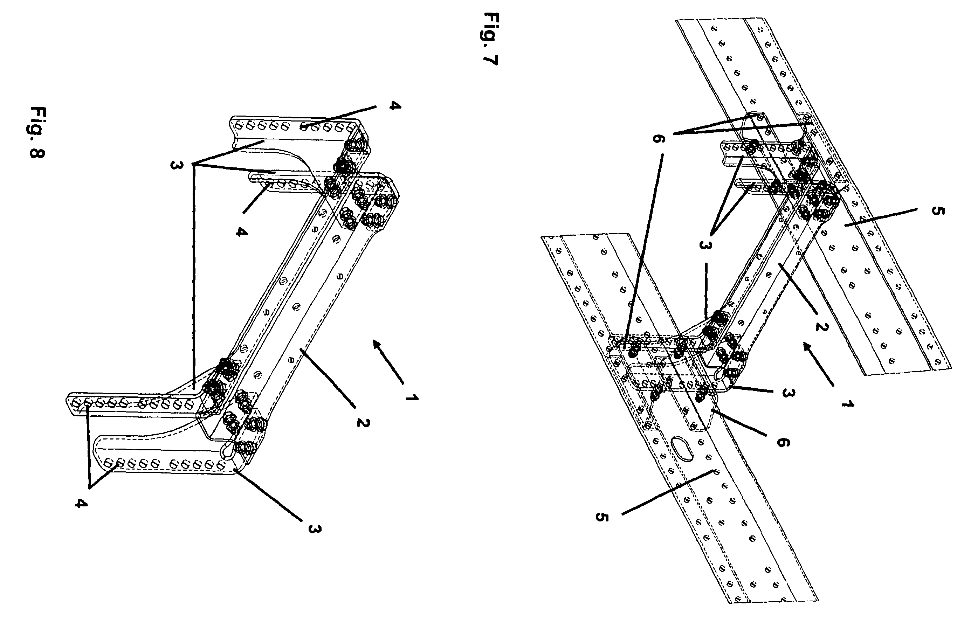

Figur 6 zeigt eine spezielle Ausführungsform der parallel verlaufenden, gegenüberliegend angeordneten Rahmenlängsträger 5, die in diesem Fall als Flachprofile ausgeführt sind. Ferner sind wieder ein Querträger 1, bestehend aus Mittelteil 2, und Anschlusskonsolen 3 zu sehen. Die Anschlusskonsolen 3 sind jeweils an einem zweiteilig ausgeführten Zwischenelement 6 befestigt, wobei die Zwischenelemente 6 wiederum an den Rahmenlängsträgern 5 montiert sind. Die Befestigung des Mittelteils 2 des Querträgers 1 an den jeweils ebenfalls zweistückig ausgeführten Anschlusskonsolen 3, der Anschlusskonsolen 3 an den Zwischenelementen 6 und die Befestigung der Zwischenelemente 6 an den Rahmenlängsträgern 5 erfolgt bei der in Figur 6 gezeigten Ausführung mittels Nietverbindungen. In Figur 7 ist ein weiterer Querträgerverbund dargestellt, bei dem die Befestigung der Komponenten Mittelteil 2, Anschlusskonsolen 3 und Zwischenelemente 6 allerdings im Gegensatz zu der zuvor beschriebenen Gestaltung mit Hilfe von Schraubverbindungen erfolgt ist.

Figur 8 zeigt nochmals einen Querträger 1 bestehend aus miteinander verschraubtem Mittelteil 2 und zwei beidseitig des Mittelteils angeordneten Anschlusskonsolen 3. In dieser Ansicht besonders gut zu erkennen sind die in Form von vertikal angeordneten Lochreihen ausgeführte Anschlussstrukturen 4. Die Anschlusskonsolen 3, die jeweils beidseitig des Mittelteils 2 angeordnet sind, verfügen über zwei schenkelartig ausgeführten Konsolenelemente, die jeweils einzeln mit dem Mittelteil verschraubt sind.

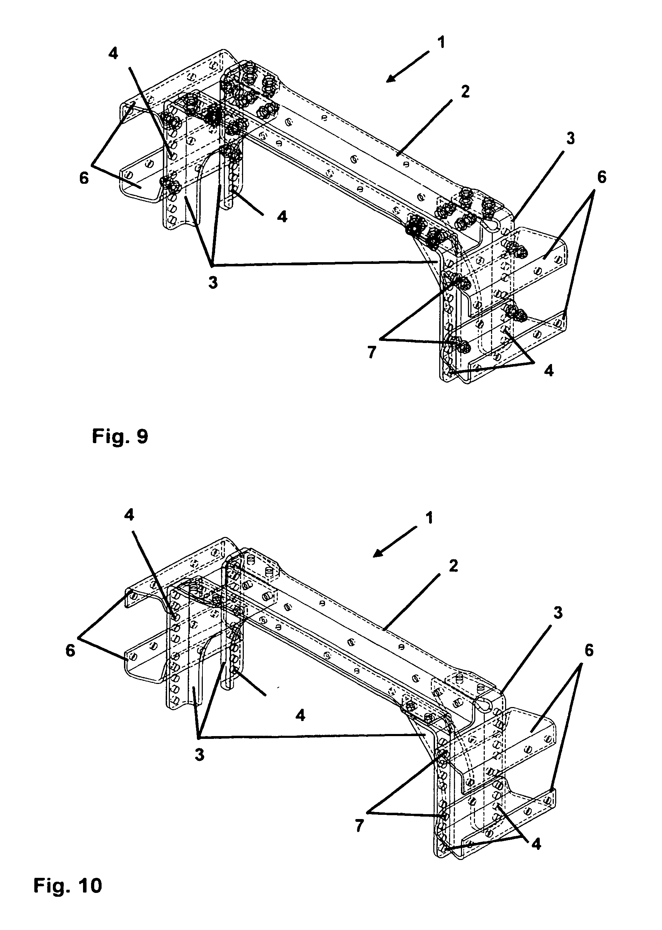

Ergänzend zu der in Figur 8 dargestellten Ausführungsvariante eines Querträgers 1 sind den Figuren 9 und 10 jeweils Querträger 1 mit Mittelteil 2 und zweiteiligen Anschlusskonsolen 3 zu entnehmen, die wiederum an zweiteilig ausgeführten Zwischenelementen 6 befestigt sind. Die Zwischenelemente 6 sind hierbei jeweils an den Rahmenlängsträgern 5 befestigt. Die Figur 9 zeigt einen Querträger, bei dem als Befestigungsmittel bzw. als Verbindungselemente Schraubverbindungen gewählt worden sind, während bei der in Figur 10 dargestellten technischen Ausführung die einzelnen Komponenten vernietet sind.

Bei allen beschriebenen und in den Figuren dargestellten Varianten ist wesentlich, dass die Anschlusskonsolen 3 über Anschlussstrukturen 4 verfügen, die eine Montage des Querträgers 1 in verschiedenen Höhen relativ zur Rahmenoberkante 8 an den Zwischenelementen 6 ermöglichen. Hierzu verfügen die Anschlusskonsolen 3 vorzugsweise über Löcher, die im Einbauzustand des Querträgers 1 vertikal übereinander angeordnet sind.

### Bezugszeichenliste

- 1: Querträger
- 2: Mittelteil
- 3: Anschlusskonsole
- 4: Anschlussstruktur
- 5: Rahmenlängsträger
- 6: Zwischenelement
- 7: Befestigungsmittel
- 8: Rahmenoberkante
- 9: Getriebe
- 10: Gelenkwelle

## Patentansprüche

1. Nutzfahrzeug, das über ein zwischen Rahmenlängsträgern (5) angeordnetes Getriebe (9), an dem ausgangsseitig eine Gelenkwelle (10) befestigt ist, verfügt und das einen Querträger (1) aufweist, der die zwei Rahmenlängsträger (5) verbindet und über ein Mittelteil (2) sowie jeweils an den gegenüberliegenden Enden des Mittelteils (2) vorgesehene Anschlusskonsolen (3) verfügt, wobei die Anschlusskonsolen (3) eine Anschlussstruktur (4) aufweisen, in die Befestigungsmittel zur mittelbaren Befestigung der Anschlusskonsolen (3) an den Rahmenlängsträgern (5) einbringbar sind, wobei die Anschlussstrukturen (4) der Anschlusskonsolen (3) derart ausgeführt sind, dass das Mittelteil (2) in wenigstens zwei unterschiedlichen Positionen relativ zur Rahmenoberkante (8) an den Rahmenlängsträgern (5) befestigbar ist und an den Rahmenlängsträgern (5) wenigstens ein Zwischenelement (6) befestigt ist, an dem die Anschlusskonsolen (3) in wenigstens zwei unterschiedlichen Positionen relativ zur Rahmenoberkante (8) befestigbar sind,
**dadurch gekennzeichnet, dass** das Mittelteil (2) mit den jeweils an den gegenüberliegenden Enden des Mittelteils (2) vorgesehenen Anschlusskonsolen derart an den Zwischenelementen (6) befestigt ist dass das Mittelteil (2) oberhalb einer Gelenkwelle (10) angeordnet ist.

2. Nutzfahrzeug nach Anspruch 1,
**dadurch gekennzeichnet, dass** eine Positionierung des Mittelteils (2) unter Zugrundelegung eines Neigungswinkels der Gelenkwelle (10) erfolgt.

3. Nutzfahrzeug nach einem der Ansprüche 1 oder 2,
**dadurch gekennzeichnet, dass** die Anschlusskonsolen (3) mittels Verbindungselementen an dem Mittelteil (2) befestigbar sind.

4. Nutzfahrzeug nach einem der Ansprüche 1 bis 3,
**dadurch gekennzeichnet, dass** das Mittelteil (2) in wenigstens zwei unterschiedlichen Höhenlagen relativ zu den Anschlusskonsolen (3) an den Anschlusskonsolen befestigbar ist.

5. Nutzfahrzeug nach einem der Ansprüche 1 bis 4,
**dadurch gekennzeichnet, dass** das Mittelteil (2) und die Anschlusskonsolen (3) einstückig ausgeführt sind.

6. Nutzfahrzeug nach einem der Ansprüche 1 bis 5,
**dadurch gekennzeichnet, dass** die Anschlusskonsolen (3) jeweils wenigstens zwei Konsolenelemente aufweisen.

## Claims

1. Commercial vehicle with a gearbox (9) arranged between frame main members (5), to the output ends of which gearbox (9) a propshaft (10) is fastened, and with a cross member (1) which joins the two frame main members (5) and is possessed of a centre section (2) and connecting brackets (3) provided at the opposite ends of the centre section (2), whereby the connecting brackets (3) have an attachment structure (4) into which fastening elements can be inserted to fasten the connecting brackets (3) directly to the frame main members (5), whereby the attachment structures (4) of the connecting brackets (3) are designed in such a way that the centre section (2) can be fastened to the frame main members (5) in at least two different positions relative to the frame top edge (8) and at least one intermediate element (6) is fastened to the frame main members (5), to which intermediate element (6) the connecting brackets (3) can be fastened in at least two different positions relative to the frame top edge (8),
**characterised in that** the centre section (2) is fastened by the connecting brackets (3) provided at the opposite ends of the centre section (2) to the intermediate elements (6) in such a way that the centre section (2) is located above a propshaft (10).

2. Commercial vehicle as in Claim 1, **characterised in that** the centre section (2) is positioned according to an angle of inclination of the propshaft (10).

3. Commercial vehicle as in Claim 1 or 2, **characterised in that** the connecting brackets (3) can be fastened to the centre section (2) by means of fastening elements.

4. Commercial vehicle as in one of Claims 1 to 3, **characterised in that** the centre section (2) can be fastened to the connecting brackets (3) at at least two different heights relative to the connecting brackets (3).

5. Commercial vehicle as in one of Claims 1 to 4, **characterised in that** the centre section (2) and the connecting brackets (3) are made in one piece.

6. Commercial vehicle as in one of Claims 1 to 5, **characterised in that** the connecting brackets (3) are each made up of at least two bracket elements.

## Revendications

1. Véhicule industriel disposant d'une boîte de vitesses (9) montée entre des longerons de cadre (5), sur laquelle est fixé côté sortie un arbre à cardans (10), et présentant une traverse (1) qui relie les deux longerons (5) et qui dispose d'une pièce centrale (2) ainsi que de consoles de raccordement prévues à chaque fois sur les extrémités opposées de la pièce centrale (2), auquel cas les consoles de raccordement (3) présentent une structure de raccordement (4) dans laquelle peuvent être montés des moyens de fixation pour fixer indirectement les consoles de raccordement (3) sur les longerons de cadre (3), auquel cas les structures de raccordement (4) des consoles de raccordement (3) sont formées de telle manière que la pièce centrale (2) peut être fixée dans au moins deux positions différentes sur les longerons de cadre (5) en fonction du bord supérieur de cadre (8) et au moins un élément intermédiaire (6) est fixé sur les longerons de cadre (5) et peut recevoir les consoles de raccordement (3) dans au moins deux positions différentes en fonction du bord supérieur de cadre (8),
**Caractérisé en ce que** la pièce centrale (2) est fixée sur les éléments intermédiaires (6) à l'aide des consoles de raccordement prévues aux extrémités opposées respectives de la pièce centrale (2) de telle manière que la pièce centrale (2) soit disposée au-dessus d'un arbre à cardans (10).

2. Véhicule industriel selon la revendication 1,
**Caractérisé en ce que** la pièce centrale (2) est positionnée en prenant comme base un angle d'inclinaison de l'arbre à cardans (10).

3. Véhicule industriel selon l'une des revendications 1 ou 2,
**Caractérisé en ce que** les consoles de raccordement (3) peuvent être fixées sur la pièce centrale (2) au moyen d'éléments de liaison.

4. Véhicule industriel selon l'une des revendications 1 à 3,
**Caractérisé en ce que** la pièce centrale (2) peut être fixée aux consoles de raccordement (3) dans au moins deux positions de hauteur différentes en fonction des consoles de raccordement (3).

5. Véhicule industriel selon l'une des revendications 1 à 4,
**Caractérisé en ce que** la pièce centrale (2) et les consoles de raccordement (3) sont formées en une seule pièce.

6. Véhicule industriel selon l'une des revendications 1 à 5,
**Caractérisé en ce que** les consoles de raccordement (3) présentent à chaque fois au moins deux éléments de console.
